# EUROPÄISCHE PATENTSCHRIFT

(11) **EP 2 664 813 B1**
(45) Veröffentlichungstag und Bekanntmachung des Hinweises auf die Patenterteilung: **12.04.2017**
(21) Anmeldenummer: 13167972.2
(22) Anmeldetag: 16.05.2013
(51) Int. Cl.: F16D 65/092, F16D 55/226

(54) **Scheibenbremse für ein Nutzfahrzeug**
Disc brake for a commercial vehicle
Frein à disque pour un véhicule utilitaire

(30) Priorität: 18.05.2012 DE 102012009901
(43) Veröffentlichungstag der Anmeldung: 20.11.2013
(73) Patentinhaber: KNORR-BREMSE Systeme für Nutzfahrzeuge GmbH, 80809 München (DE)
(72) Erfinder: Hidringer, Michael, 94544 Hofkirchen (DE); Brandl, Christian, 94447 Plattling (DE)

(56) Entgegenhaltungen:
- EP-A1- 0 001 762
- EP-A1- 0 691 485
- GB-A- 2 262 145
- US-A- 3 042 152
- US-A- 6 073 732

## Beschreibung

Die Erfindung betrifft eine Scheibenbremse für ein Nutzfahrzeug nach dem Oberbegriff des Anspruchs 1.

Im Fall einer Bremsung erfolgt die Zuspannung von Bremsbelägen mittels der Zuspanneinrichtung durch ein Andrücken des aktionsseitigen Bremsbelages gegen die Bremsscheibe und bei einem als Schiebesattel ausgebildeten Bremssattel durch nachfolgendes Anpressen des gegenüberliegenden, reaktionsseitigen Bremsbelages, wobei der Bremssattel entgegen der Zuspannrichtung des aktionsseitigen Bremsbelages verschoben wird.

Nach einem Lösen der Bremse stellt sich ein Lüftspiel ein, d.h., ein Spalt zwischen dem Bremsbelag und der Bremsscheibe, innerhalb dessen sich die Bremsbeläge in einem Belagschacht der Bremse bewegen.

Durch Vibrationen, Erschütterungen und Querbeschleunigungen bei Kurvenfahrten können jedoch die Bremsbeläge an der Bremsscheibe zur Anlage kommen, was im Fahrbetrieb zu Restschleifmomenten führt mit der Folge eines höheren Belagverschleißes sowie einem erhöhten Kraftstoffverbrauch.

Grundsätzlich ist jedoch nicht gewährleistet, dass sich die Bremsbeläge von der Bremsscheibe lösen, wenn der Bremsvorgang unter- bzw. abgebrochen wird.

Insbesondere, wenn beispielsweise die Bremsbeläge durch Korrosion an der Bremsscheibe anhaften, reichen die fahrbedingten Erschütterungen oder ein Taumelschlag nicht aus, um eine kontaktfreie Position der Bremsbeläge mit Sicherheit zu erreichen.

Aber selbst dann, wenn sich die Bremsbeläge von der Bremsscheibe lösen, ist der Rückzug der Bremsbeläge, d.h., ist das erzielbare Lüftspiel nicht definiert, so das ein Schleifen der Bremsbeläge an der Bremsscheibe nicht vollständig vermieden werden kann.

In der US 3 042 152 A ist eine Scheibenbremse offenbart, die, entgegen einer gattungsgemäßen Scheibenbremse, zwei sich gegenüberliegende Bremskolben aufweist, an denen formschlüssig jeweils ein Bremsbelag befestigt ist.

Eine vergleichbare Konstruktion ist aus der EP 0 001 762 A1 bekannt.

Der Erfindung liegt die Aufgabe zugrunde, eine Scheibenbremse der gattungsgemäßen Art so weiterzuentwickeln, dass eine bestimmte, gleichbleibende Rückstellung der Bremsbeläge gewährleistet ist.

Diese Aufgabe wird durch eine Scheibenbremse mit den Merkmalen des Anspruchs 1 gelöst.

Durch diese konstruktive Ausbildung wird sozusagen eine Zwangslösung der Bremsbeläge bei einer Unterbrechung des Bremsvorgangs erreicht und zwar in einem Maß, das dem vorbestimmten Lüftspiel entspricht.

Der Rückzug der Bremsstempel erfolgt dabei bei einer pneumatisch betätigten Schiebesattel-Scheibenbremse mittels einer begrenzt bewegbaren Druckfeder, wobei nun, da ein Verbund zwischen den Bremsbelägen und den Bremsstempeln bzw. dem Bremssattel besteht, die Rückstellbewegung als Einheit erfolgt, ebenso wie im Übrigen eine Nachstellbewegung zum Ausgleich einer verschleißbedingten Änderung des Lüftspiels mittels einer Nachstelleinrichtung.

Da die Bremsscheibe gegenüber den Bremsbelägen bei gelöster Bremse in jeder Situation des Fahrbetriebes frei läuft, d.h., ein Kontakt der Bremsbeläge während dieser Phase mit der Bremsscheibe ausgeschlossen ist, werden auch die zum Stand der Technik beschriebenen Nachteile verhindert. Hierzu zählt insbesondere, dass der Abrieb des Bremsbelages nunmehr ausschließlich bei einer gewollten Bremsung erfolgt, so dass die Standzeit des Bremsbelages in einem durchaus bemerkenswerten Umfang verlängert wird.

Dazu trägt auch bei, dass durch die Erfindung ein ungleichmäßiger Verschleiß der Bremsbeläge vermieden wird, so dass zu jedem Zeitpunkt der Bremsung die Bremsbeläge vollflächig an der Bremsscheibe anliegen, also mit ihrem maximal möglichen Abmaß. Insofern führt die Erfindung zu einer Verbesserung der Betriebssicherheit, ohne dass hierzu besondere Maßnahmen erforderlich wären, wie beispielsweise eine Zwischenüberprüfung.

Die Gesamtheit der genannten Vorteile führen zu einer Kostenersparnis, die insbesondere deshalb bedeutsam ist, als Scheibenbremsen, entsprechend dem Gattungsbegriff, in Nutzfahrzeugen eingesetzt und damit einer auch bezüglich der Betriebsdauer besonderen Beanspruchung unterliegen.

Gemäß einer vorteilhaften Weiterbildung der Erfindung sind die Hinterschneidungen der Belagträgerplatten, in die die Mitnehmerkeile der Druckstücke bzw. des Bremssattelrückens eingreifen, angeformt.

Bei der Herstellung der Belagträgerplatte als Gussteil können die Hinterschneidungen bzw. die dazu erforderlichen Konfigurationen der den Bremsstempeln bzw. dem Sattelrücken zugewandten Rückseite der Belagträgerplatten in einem Arbeitsgang mit angegossen werden. Bei einer Ausbildung der Belagträgerplatte als Blechform werden die Hinterschneidungen durch Stanzen und Umformen hergestellt.

Dies gilt gleichermaßen für die Ausbildung der Mitnehmerkeile an den Druckstücken der Bremsstempel, die bevorzugt so ausgebildet sind, dass sie verdrehfest an der Belagträgerplatte gehalten sind.

Dabei können die Druckstücke der beiden Bremsstempel, je nach Konstruktionsprinzip einer Nachstellung zum Ausgleich des Lüftspiels verdrehbar oder starr mit dem Bremsstempel verbunden sein, der als Gewinderohr mit einem Außengewinde ausgebildet ist.

Da der Bremssattel üblicherweise ebenfalls aus Gusseisen besteht, sind auch hier die Mitnehmerkeile am Bremssattelrücken angeformt und zwar auf der dem reaktionsseitigen Bremsbelag zugewandten Seite. Zur Befestigung der Bremsbeläge sind die Hinterschneidungen in den Belagträgerplatten so ausgebildet, dass die Bremsbeläge auf die Mitnehmerkeile aufgeschoben werden können.

Bevorzugt ist die maßliche Abstimmung der Hinterschneidungen und der Mitnehmerkeile zueinander so gewählt, dass ein Aufstecken der Bremsbeläge ohne besondere Erschwernis möglich ist, andererseits eine weitgehend spielfreie Anlage in Zuspannrichtung gegeben ist.

Anstelle der genannten Anformung der Hinterschneidungen der Belagträgerplatten beim Gießen oder Umformen, besteht auch die Möglichkeit, die Hinterschneidungen durch separat hergestellte Bügel, vorzugsweise aus Blech, insbesondere Federblech, herzustellen und mit den Belagträgerplatten form- oder stoffschlüssig zu verbinden, beispielsweise durch Vernieten, Verschrauben, Verschweißen oder dergleichen.

Die Konfiguration der Hinterschneidungen einerseits und der eingreifenden Mitnehmerkeile andererseits kann eine Kodierung bilden, d.h., nur solche Bremsbeläge sind tatsächlich einsetzbar, deren Hinterschneidungen an die Mitnehmerkeile angepasst sind. Naturgemäß ergibt sich hierdurch gleichfalls eine Verbesserung der Betriebssicherheit, da nur die autorisiert hergestellten Bremsbeläge eingesetzt werden können. Dabei kann die Kodierung durch eine spezielle maßliche Variation hergestellt werden, die bei den Mitnehmerkeilen und den Hinterschneidungen identisch bzw. aneinander angepasst ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine schematische Darstellung einer erfindungsgemäßen Scheibenbremse in einer geschnittenen Draufsicht

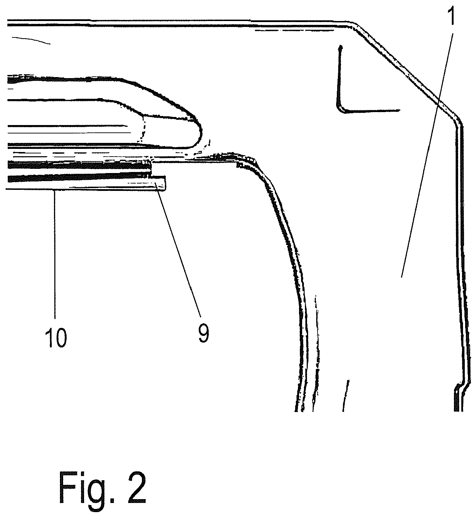

- Figur 2: einen Teilausschnitt eines Bremssattels gemäß der Erfindung in einer Draufsicht
- Figur 3: einen Bremsbelag nach der Erfindung in einer perspektivischen Ansicht
- Figur 4: einen Bremsstempel gemäß der Erfindung, gleichfalls perspektivisch dargestellt.

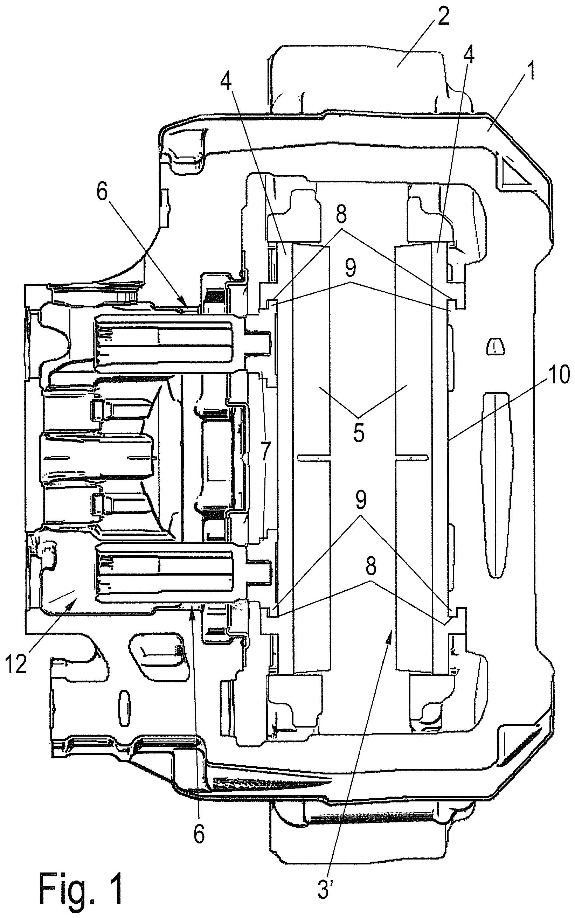

In der Figur 1 ist in schematischer Darstellung eine Scheibenbremse für ein Nutzfahrzeug erkennbar, mit einem eine nicht gezeigte Bremsscheibe überspannenden Bremssattel 1, der axial verschiebbar an einem ortsfesten Bremsträger 2 befestigt ist und in dem Bremsbeläge 3, 3' angeordnet sind, die im Fall einer Bremsung gegen die Bremsscheibe gepresst werden.

Hierzu ist im Bremssattel 1 eine Zuspanneinrichtung 12 vorgesehen, mit zwei parallel und abständig zueinander angeordneten Bremsstempeln 6, an deren dem Bremsbelag 3 zugewandten Ende jeweils ein Druckstück 7 angeschlossen ist.

Gemäß der Erfindung greifen die Druckstücke 7 mit angeformten Mitnehmerkeilen 9 in Hinterschneidungen 8 einer Belagträgerplatte 4 des zugeordneten Bremsbelages 3, die auf ihrer der Bremsscheibe zugewandten Seite einen Reibbelag 5 trägt.

Der gegenüberliegende reaktionsseitige Bremsbelag 3' stützt sich an einem Bremssattelrücken 10 ab, der zwei Mitnehmerkeile 9 aufweist, die jeweils in eine Hinterschneidung 8 der zugeordneten Belagträgerplatte 4 des Bremsbelages 3' formschlüssig eingreift.

In diesem Sinne sind auch die Druckstücke 7 mit der zugeordneten Belagträgerplatte 4 des aktionsseitigen Bremsbelags 3 verbunden, wobei auch hier die Belagträgerplatte 4 Hinterschneidungen 8 aufweist, die sich in Form von Nuten quer zum Längsverlauf der Belagträgerplatte 4, also in Einschubrichtung des Bremsbelages 3 erstrecken.

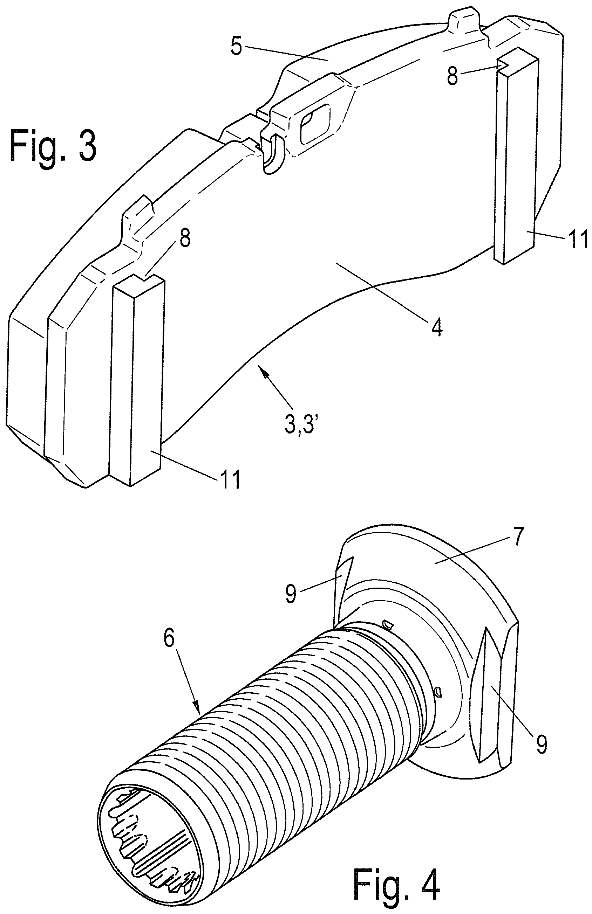

In der Figur 3 ist ein Bremsbelag 3, 3' als Einzelheit dargestellt, in einer rückseitigen Ansicht, in der die Belagträgerplatte 4 mit den Hinterschneidungen 8 deutlich zu erkennen ist.

Hierbei sind die Hinterschneidungen 8 durch an der Belagträgerplatte 4 angeformte Stege 11 gebildet, wobei die offenen Längsseiten der Hinterschneidungen 8 einander zugewandt sind, so dass die Mitnehmerkeile 9 des Bremssattelrückens 10 und andererseits die Mitnehmerkeile 9 der Druckstücke 7 von der jeweiligen Belagträgerplatte 4 übergriffen werden.

Die Mitnehmerkeile 9 des jeweiligen Druckstücks 7 werden durch Abflachungen der in Richtung des Bremsstempels 6 gewölbten Seite des Druckstücks 7 gebildet, wobei beidseitig des Bremsstempels 6 jeweils ein Mitnehmerkeil 9 am Druckstück 7 angeformt ist, so dass der Bremsstempel 6 mit angeordnetem Druckstück 7, das fest mit dem Bremsstempel 6 oder drehbar damit verbunden sein kann, auch bei einer verdrehten Stellung des Bremsstempels 6 in die jeweilige Hinterschneidung 8 der Belagträgerplatte 4 eingreift.

Wie zu erkennen ist, erfolgt der Formschluss zwischen den Bremsbelägen 3, 3' und den Mitnehmerkeilen 9 der Druckstücke 7 bzw. des Bremssattelrückens 10 beim Einschieben der Bremsbeläge 3, 3' zwangsläufig.

## Patentansprüche

1. Scheibenbremse für ein Nutzfahrzeug, mit einem eine Bremsscheibe übergreifenden, in deren Richtung verschiebbaren Bremssattel und einer darin angeordneten Zuspanneinrichtung (12), die zwei parallel und abständig zueinander angeordnete Bremsstempel (6) aufweist, an denen jeweils ein an einem zuspannseitigen Bremsbelag (3) anliegendes Druckstück (7) angeschlossen ist, und mit einem an einem Bremssattelrücken (10) anliegenden, reaktionsseitigen Bremsbelag (3'), **dadurch gekennzeichnet, dass** der zuspannseitige Bremsbelag (3) mit den anliegenden Druckstücken (7) und der reaktionsseitige Bremsbelag (3') mit dem Bremssattelrücken (10) in Verschieberichtung des Bremssattels (1) formschlüssig verbunden sind, wozu an der Rückseite einer Belagträgerplatte (4) des jeweiligen Bremsbelages (3, 3') Hinterschneidungen (8) vorgesehen sind, in die angeformte Mitnehmerkeile (9) der Druckstücke (7) und des Bremssattelrückens (10) eingreifen, wobei zumindest eine Hinterschneidung (8) und der jeweils eingreifende Mitnehmerkeil (9) von den anderen Hinterschneidungen (8) und zugeordneten Mitnehmerkeilen (9) im Sinne einer Kodierung unterschiedlich sind.

2. Scheibenbremse nach Anspruch 1, **dadurch gekennzeichnet, dass** jedes Druckstück (7) zwei parallel zueinander verlaufende Mitnehmerkeile (9) aufweist.

3. Scheibenbremse nach Anspruch 1 oder 2, **dadurch gekennzeichnet, dass** die Hinterschneidungen (8) an die Belagträgerplatte (4) angeformt sind.

4. Scheibenbremse nach einem vorhergehenden Anspruch, **dadurch gekennzeichnet, dass** die Hinterschneidungen (8) in Einschieberichtung der Bremsbeläge (3, 3') verlaufen.

5. Scheibenbremse nach einem vorhergehenden Anspruch, **dadurch gekennzeichnet, dass** die Hinterschneidungen (8) als Nuten ausgebildet sind, deren offene Längsseiten einander zugewandt sind.

6. Scheibenbremse nach einem vorhergehenden Anspruch, **dadurch gekennzeichnet, dass** die Mitnehmerkeile (9) des aus Gusseisen bestehenden Bremssattels (1) beim Gießen angeformt sind.

7. Scheibenbremse nach einem vorhergehenden Anspruch, **dadurch gekennzeichnet, dass** die einander zugeordneten Querschnittsabmaße der Mitnehmerkeile (9) und der Hinterschneidungen (8) derart gewählt sind, dass sich eine spielfreie Verbindung ergibt.

8. Scheibenbremse nach einem vorhergehenden Anspruch, **dadurch gekennzeichnet, dass** die Druckstücke (7) verdrehsicher an der zugeordneten Belagträgerplatte (4) des Bremsbelages (3) gehalten sind.

## Claims

1. A disc brake for a commercial vehicle, comprising a brake caliper overlapping a brake disc and being displaceable in the direction thereof, and comprising a tensioning device (12) arranged therein which exhibits two brake plungers (6) that are arranged in parallel to and spaced from each other, to which a pressure piece (7) resting against a tension-side brake pad (3) is in each case connected, and comprising a reaction-side brake pad (3') resting against a brake caliper back (10), **characterized in that** the tension-side brake pad (3) with the applied pressure pieces (7), and the reaction-side brake pad (3') with the brake caliper back (10) are in form-fit connection in the brake caliper's (1) direction of displacement, to which purpose undercuts (8) are provided at the back side of a pad carrier plate (4) of the respective brake pad (3, 3'), into which undercuts integrally formed driver wedges (9) of the pressure pieces (7) and the brake caliper back (10) engage, wherein at least one undercut (8) and the respective engaging driver wedge (9) are different from the other undercuts (8) and associated driver wedges (9) in terms of coding.

2. The disc brake according to claim 1, **characterized in that** each pressure piece (7) exhibits two driver wedges (9) extending in parallel to each other.

3. The disc brake according to claim 1 or 2, **characterized in that** the undercuts (8) are integrally formed on the pad carrier plate (4).

4. The disc brake according to any preceding claim, **characterized in that** the undercuts (8) pass along the brake pads' (3, 3') direction of insertion.

5. The disc brake according to any preceding claim, **characterized in that** the undercuts (8) are formed as grooves, the open longitudinal sides thereof are facing each other.

6. The disc brake according to any preceding claim, **characterized in that** the driver wedges (9) of the brake caliper (1) made of cast iron are integrally formed during casting.

7. The disc brake according to any preceding claim, **characterized in that** the mutually assigned cross-sectional dimensions of the driver wedges (9) and the undercuts (8) are selected such that the result is a zero-play connection.

8. The disc brake according to any preceding claim, **characterized in that** the pressure pieces (7) are held on the brake pad's (3) pad carrier plate (4) in an anti-twist manner.

## Revendications

1. Frein à disque pour un véhicule utilitaire, comprenant un étrier de frein enjambant un disque de frein et translatable dans sa direction ainsi qu'un dispositif de serrage (12) disposé dans celui-ci et présentant deux pistons de frein (6) disposés parallèlement et à distance l'un de l'autre, au niveau desquels respectivement une pièce de pression (7) appliquée à une garniture de frein (3) côté serrage est raccordée, et comprenant une garniture de frein (3') côté réaction appliquée à un dos d'étrier de frein (10), **caractérisé en ce que** la garniture de frein (3) côté serrage est raccordée aux pièces de pression (7) appliquées et la garniture de frein (3') côté réaction est raccordée au dos d'étrier de frein (10) par liaison à engagement positif en direction de translation de l'étrier de frein (1), ce pour quoi sont prévues, sur la face arrière d'une plaque porte-garniture (4) de la garniture de frein (3, 3') respective, des contre-dépouilles (8) dans lesquelles des coins entraîneurs (9) moulés des pièces de pression (7) et du dos d'étrier de frein (10) s'engagent, sachant qu'au moins une contre-dépouille (8) et le coin entraîneur (9) qui s'y engage respectivement sont différents, au sens d'un codage, des autres contre-dépouilles (8) et coins entraîneurs (9) associés.

2. Frein à disque selon la revendication 1, **caractérisé en ce que** chaque pièce de pression (7) présente deux coins entraîneurs (9) qui ont un tracé parallèle.

3. Frein à disque selon la revendication 1 ou 2, **caractérisé en ce que** les contre-dépouilles (8) sont moulées sur la forme de la plaque porte-garniture (4).

4. Frein à disque selon une revendication précédente, **caractérisé en ce que** les contre-dépouilles (8) ont un tracé qui va en direction d'insertion des garnitures de frein (3, 3').

5. Frein à disque selon une revendication précédente, **caractérisé en ce que** les contre-dépouilles (8) sont constituées comme rainures dont les côtés longitudinaux ouverts sont tournés l'un vers l'autre.

6. Frein à disque selon une revendication précédente, **caractérisé en ce que** les coins entraîneurs (9) de l'étrier de frein (1) composé de fonte sont moulés lors du moulage.

7. Frein à disque selon une revendication précédente, **caractérisé en ce que** les cotes de coupe tranversale associées les unes aux autres des coins entraîneurs (9) et des contre-dépouilles (8) sont choisies de manière à assurer une liaison sans jeu.

8. Frein à disque selon une revendication précédente, **caractérisé en ce que** les pièces de pression (7) sont maintenues de manière fixe en rotation au niveau de la plaque porte-garniture (4) associée de la garniture de frein (3).
